# EUROPÄISCHE PATENTSCHRIFT

(11) **EP 1 300 715 B1**
(45) Veröffentlichungstag und Bekanntmachung des Hinweises auf die Patenterteilung: **12.04.2006**
(21) Anmeldenummer: 02017157.5
(22) Anmeldetag: 30.07.2002
(51) Int. Cl.: G02B 26/10, G01S 7/481, G01S 17/02

(54) **Optoelektronische Erfassungseinrichtung**
Optoelectronic detecting device
Dispositif de détection optoélectronique

(30) Priorität: 03.09.2001 DE 10143060
(43) Veröffentlichungstag der Anmeldung: 09.04.2003
(73) Patentinhaber: SICK AG, 79183 Waldkirch, Breisgau (DE)
(72) Erfinder: Hipp, Johann, 22931 Hamburg (DE)
(74) Vertreter: Manitz, Finsterwald & Partner GbR

(56) Entgegenhaltungen:
- EP-A- 0 185 816
- EP-A- 0 653 720
- EP-A- 1 055 937
- DE-A- 4 412 044
- DE-C- 930 909
- US-A- 5 710 417

## Beschreibung

Die Erfindung betrifft eine optoelektronische Erfassungseinrichtung gemäß dem Oberbegriff des Anspruchs 1.

Derartige Erfassungseinrichtungen sind grundsätzlich bekannt und werden beispielsweise an Fahrzeugen angebracht, um während der Fahrt die Umgebung des Fahrzeugs zu erfassen.

EP 0 185 816 A1 beschreibt ein System zur Führung und Steuerung von Fahrzeugen. Jedes Fahrzeug ist mit einer Erfassungseinrichtung gemäß dem Oberbegriff des Anspruchs 1 versehen. Ferner sind in dem räumlichen Bereich, in welchem die Fahrzeuge geführt und gesteuert werden sollen, mehrere Markierungstafeln angeordnet, die jeweils ein von Codierstreifen gebildetes Muster aufweisen. Diese Tafeln werden mittels der ausgesandten Strahlung abgetastet und durch Auswerten der reflektierten Strahlung erkannt. Nach dem Triangulationsprinzip kann bei Auswertung von zumindest zwei Tafeln die Fahrzeugposition bestimmt werden. Die räumliche Orientierung des lang gestreckten Strahlungsquerschnitts der ausgesandten Abtaststrahlung ist auf die Orientierung der Codierstreifen abgestimmt.

EP 0 653 720 A2 beschreibt ein Verfahren sowie eine Vorrichtung zum Lesen von Barcodes mit einem strichförmigen Laserabtaststrahl. Die Abtastung des Barcodes - oder eines anderen Symbols ― erfolgt dadurch, dass der Abtaststrahl mittels eines bewegbaren, beispielsweise rotierenden, Spiegels über das zu lesende Symbol geführt wird. Diese Überstreichbewegung des Abtaststrahls erfolgt dabei senkrecht zu dessen Längserstreckung.

Aufgabe der Erfindung ist es, eine optoelektronische Erfassungseinrichtung der eingangs genannten Art zu schaffen, die eine zuverlässige Erfassung des Überwachungsbereiches gestattet und möglichst einfach aufgebaut ist und die insbesondere eine möglichst geringe Anzahl an zu bewegenden Bauteilen aufweist.

Die Lösung dieser Aufgabe erfolgt durch die Merkmale des Anspruchs 1.

Erfindungsgemäß erfolgt die Abtastung des Überwachungsbereiches nicht lediglich mit Hilfe von punktförmig in den Überwachungsbereich ausgesandter Strahlung, sondern die Erfassungseinrichtung ist in der Lage, eine langgestreckte Strahlungsfront in den Überwachungsbereich auszusenden. Hierzu dient die Strahlungsumlenkeinrichtung, welche die langgestreckte Strahlungsfront im Anschluß an deren Erzeugung derart umlenkt, daß die Strahlungsfront in einer von der Stellung der Umlenkeinrichtung abhängigen Orientierung in den Überwachungsbereich ausgesandt wird. Die Abtastung des Überwachungsbereiches erfolgt also mittels einer zweidimensionalen Strahlungsfront, was zusammen mit der Bewegung der Strahlungsumlenkeinrichtung eine dreidimensionale oder quasidreidimensionale Abtastung des Überwachungsbereiches ergibt. Bei Verwendung einer entsprechend ausgestalteten Empfangseinheit können einzelne Abschnitte der reflektierten langgestreckten Strahlungsfront getrennt ausgewertet werden, d. h. es kann für jede Richtung, in welche der Lichtstrich ausgesandt wird, ein Profil des jeweils abgetasteten Gegenstands aufgenommen werden. Mittels der bewegbaren Strahlungsumlenkeinrichtung können ferner verschiedene Orientierungen der in den Überwachungsbereich ausgesandten Strahlungsfront realisiert werden, wodurch die erfindungsgemäße optoelektronische Erfassungseinrichtung gezielt an den jeweiligen Anwendungszweck angepaßt werden kann.

Von besonderem Vorteil der Erfindung ist, daß die Strahlungsumlenkeinrichtung das einzige Bauteil ist, das bewegt zu werden braucht, um den Überwachungsbereich mittels der Strahlungsfront abzutasten. Die Sendeeinheit und die Empfangseinheit sowie die damit verbundenen Versorgungs- und Anschlußeinrichtungen brauchen nicht bewegt zu werden. Der Aufbau der erfindungsgemäßen Erfassungseinrichtung wird hierdurch erheblich vereinfacht. Da die Strahlungsumlenkeinrichtung relativ zu der sich ausbreitenden Strahlungsfront bewegt wird, ändert sich die Orientierung der Strahlungsfront bezogen auf die Ausrichtung der Empfangseinheit nicht, d. h. die Orientierung der Strahlungsfront vor ihrer Umlenkung in den Überwachungsbereich einerseits und nach Reflexion im Überwachungsbereich und erneuter Umlenkung zurück in Richtung der Empfangseinheit andererseits ist die gleiche. Bei der Ausgestaltung der Empfangseinheit braucht daher den verschiedenen Orientierungen der Strahlungsfront im Überwachungsbereich nicht Rechnung getragen zu werden, wodurch der Aufbau der Empfangseinheit einfach gehalten werden kann.

Ferner ist erfindungsgemäß von Vorteil, daß keine optischen Bauelemente zur Erzeugung der langgestreckten Strahlungsfront erforderlich sind, die sich zusammen mit der Strahlungsumlenkeinrichtung bewegen müssen. Der Aufbau der erfindungsgemäßen Erfassungseinrichtung wird hierdurch weiter vereinfacht. Insbesondere kann erfindungsgemäß eine besonders geringe Bauhöhe und damit insgesamt eine vorteilhafte Kompaktheit realisiert werden, da zwischen Sendeeinheit bzw. Empfangseinheit einerseits und Strahlungsumlenkeinrichtung andererseits keine zusammen mit der Umlenkeinrichtung zu bewegenden Bauelemente zur Erzeugung der Strahlungsfront benötigt werden.

Erfindungsgemäß ist die Sendeeinheit zur Aussendung der langgestreckten Strahlungsfront ausgebildet. Hierbei ist es die Sendeeinheit selbst, welche die langgestreckte Strahlungsfront erzeugt, so daß zwischen Sendeeinheit und Strahlungsumlenkeinrichtung keine optischen Bauelemente benötigt werden.

Ferner ist erfindungsemäß vorgesehen, daß eine Reflexionsfläche der Strahlungsumlenkeinrichtung geneigt zu einer Sende- und/oder Empfangsebene verläuft und die Umlenkeinrichtung um eine sich etwa senkrecht zur Sende- und/oder Empfangsebene erstreckende Achse drehbar ist.

Hierdurch wird erreicht, daß in einer Drehstellung der Strahlungsumlenkeinrichtung die von der Reflexionsfläche in den Überwachungsbereich reflektierte Strahlungsfront bezogen auf die Sende- und/ oder Empfangsebene senkrecht steht, d. h. gewissermaßen ein aufrecht stehender Lichtstrich ausgesandt wird, wohingegen bei einer Weiterdrehung der Strahlungsumlenkeinrichtung um 90° die in den Überwachungsbereich ausgesandte Strahlungsfront in einer parallel zur Sende- und/oder Empfangsebene verlaufenden Ebene liegt, d. h. gewissermaßen mit einem liegenden Lichtstrich gearbeitet wird. In Zwischendrehstellungen der Strahlungsumlenkeinrichtung erstreckt sich die Strahlungsfront dann mehr oder weniger geneigt zur Sende- und/oder Empfangsebene. Bei sich drehender Strahlungsumlenkeinrichtung wird folglich mit einem rotierenden Bild bzw. mit einem sich drehenden Lichtstrich gearbeitet.

In einer besonders bevorzugten Ausgestaltung der Erfindung handelt es sich bei der Strahlungsfront um einen durchgehenden Strahlungsstrich. In den Überwachungsbereich wird hierbei folglich ein Lichtstrich ausgesandt, mit dem im Überwachungsbereich befindliche Objekte nicht zeilenweise, sondern flächig abgetastet werden, so daß insgesamt eine dreidimensionale Abtastung erfolgt.

Alternativ kann die langgestreckte Strahlungsfront auch von diskreten, entlang einer Linie angeordneten Strahlungsflecken gebildet werden, indem z. B. von einer entsprechend ausgebildeten Sendeeinheit gleichzeitig mehrere "Lichtfinger" oder Einzelstrahlen auf die Strahlungsumlenkeinrichtung gerichtet werden. Auch auf diese Weise ist eine dreidimensionale Erfassung des Überwachungsbereiches möglich.

Ferner ist es bevorzugt, wenn sich die Strahlung aufspreizend in Richtung der Strahlungsumlenkeinrichtung ausbreitet. Der Ursprung der Aufspreizung ist vorzugsweise während des Betriebs relativ zur Sendeeinheit und Empfangseinheit unbewegt. Insbesondere wird der Ursprung der Aufspreizung von der Sendeeinheit gebildet.

Vorzugsweise ist die sich von der Sendeeinheit zur Strahlungsumlenkeinrichtung ausbreitende Strahlung durch zur Strahlungsbrechung oder -beugung dienende optische Bauelemente unbeeinflußt. Hierdurch läßt sich eine besonders vorteilhafte Kompaktheit der Erfassungseinrichtung realisieren.

Diese Kompaktheit insbesondere durch Reduzierung der Bauhöhe ist ein wesentlicher Schritt in Richtung einer Miniaturisierung optoelektronischer Erfassungseinrichtungen, was insbesondere für die Verwendung an oder in Fahrzeugen von Bedeutung ist, wo in der Regel wenig Platz für derartige Erfassungseinrichtungen zur Verfügung steht. Außerdem wird hierdurch der Windwiderstand minimiert.

In einer besonders bevorzugten praktischen Ausgestaltung der Erfindung ist die Strahlungsumlenkeinrichtung drehbar und insbesondere zur Ausführung einer kontinuierlichen Rotationsbewegung mit einer konstanten Drehzahl ausgebildet. Hierdurch wird eine Abtast- oder Scannerfunktion realisiert, mit der es möglich ist, eine Abtastung über eine Winkelbereich von bis zu 360° und somit eine Überwachung der gesamten Umgebung der Erfassungseinrichtung zu verwirklichen.

Die Strahlungsumlenkeinrichtung weist vorzugsweise wenigstens eine ebene Reflexionsfläche für von der Sendeeinheit ausgesandte und aus dem Überwachungsbereich reflektierte Strahlung auf. Bei dieser Reflexionsfläche handelt es sich bevorzugt um einen Planspiegel. Die Strahlungsumlenkeinrichtung ist insbesondere als Spiegel- und/oder Prismaeinrichtung ausgebildet.

Gemäß einer weiteren bevorzugten Ausführungsform der Erfindung ist vorgesehen, daß die Sendeeinheit als Strahlungsquelle wenigstens eine Laserdiode umfaßt, die zur Aussendung einer linien- oder strichförmigen Strahlungsfront ausgebildet ist.

Ferner ist bevorzugt vorgesehen, daß einer Strahlungsquelle der Sendeeinheit eine Sendeoptik vorgelagert ist. Die Strahlungsquelle, insbesondere eine Laserdiode, und die Sendeoptik können zu einer kompakten Einheit zusammengefaßt sein. Zusätzliche optische Bauelemente zwischen der Sendeeinheit und der Strahlungsumlenkeinrichtung zur Erzeugung der langgestreckten Strahlungsfront sind hierdurch nicht erforderlich, wodurch insgesamt eine vorteilhafte kompakte Bauweise der erfindungsgemäßen Erfassungseinrichtung erzielt wird.

Ferner wird erfindungsgemäß vorgeschlagen, daß die Empfangseinheit wenigstens einen flächigen Strahlungsempfänger aufweist. Der Strahlungsempfänger ist bevorzugt an die langgestreckte Form der Strahlungsfront angepaßt und weist insbesondere eine etwa streifenförmige Grundform auf.

Vorzugsweise umfaßt die Empfangseinheit, insbesondere ein flächiger Strahlungsempfänger der Empfangseinheit, eine Mehrzahl von Photodioden, die insbesondere ein- oder mehrzeilig angeordnet sind.

Ferner ist bevorzugt vorgesehen, daß die Sendeeinheit und die Empfangseinheit zumindest näherungsweise eine gemeinsame Sende-/Empfangsebene bilden. Insbesondere wird diese Sende-/Empfangsebene von einer der Strahlungsquelle vorgelagerten Sendeoptik sowie einer einem flächigen Strahlungsempfänger vorgelagerten Empfangsoptik der Empfangseinheit gebildet.

Die Erfindung betrifft außerdem die Verwendung wenigstens einer optoelektronischen Erfassungseinrichtung, wie sie vorstehend beschrieben wurde, in Verbindung mit einem Fahrzeug. Insbesondere wird dabei die optoelektronische Erfassungseinrichtung zur Objekterkennung und -verfolgung eingesetzt.

Vorzugsweise wird dabei eine optoelektronische Erfassungseinrichtung verwendet, die derart ausgebildet ist und am oder im Fahrzeug angebracht wird, daß bei normalem Fahrbetrieb die eine langgestreckte Form aufweisende Strahlungsfront sich bei Ausbreitung in Fahrtrichtung nach vorne zumindest im wesentlichen in vertikaler Richtung erstreckt.

Diese Verwendung hat den Vorteil, daß aus dem in Fahrtrichtung vor dem Fahrzeug liegenden Bereich Höheninformationen z. B. über vorausfahrende Fahrzeuge beschafft werden können.

Weitere bevorzugte Ausführungsformen der Erfindung betreffend sowohl die optoelektronische Erfassungseinrichtung selbst als auch die erfindungsgemäße Verwendung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1a: schematisch eine Ausführungsform einer erfindungsgemäßen optoelektronischen Erfassungseinrichtung in Seitenansicht mit in einer Drehstellung befindlicher Strahlungsumlenkeinrichtung,
- Fig. 1b: die Erfassungseinrichtung von Fig. 1a in einer schematischen Draufsicht,
- Fig. 2a: die Erfassungseinrichtung von Fig. 1a mit in einer anderen Drehstellung befindlicher Strahlungsumlenkeinrichtung,
- Fig. 2b: die Erfassungseinrichtung von Fig. 2a schematisch in einer Draufsicht,
- Fig. 3: schematisch eine Seitenansicht einer erfindungsgemäßen optoelektronischen Erfassungseinrichtung mit einem optischen System und einer Spiegelbaugruppe,
- Fig. 4: schematisch eine Draufsicht auf ein Empfängerarray der Erfassungseinrichtung von Fig. 3,
- Fig. 5: das Funktionsprinzip der Strahlungsquelle der Erfassungseinrichtung von Fig. 3,
- Fig. 6: eine Darstellung zur Erläuterung des Scanbildes einer erfindungsgemäßen Erfassungseinrichtung.

Die erfindungsgemäße Erfassungseinrichtung umfaßt eine Sendeeinheit 11, die eine als Strahlungsquelle dienende Laserdiode 25 und eine der Laserdiode 25 vorgelagerte Sendeoptik 27 in Form einer Linse oder Linsenanordnung aufweist. Ferner ist eine Empfangseinheit 13 vorgesehen, die einen flächigen Strahlungsempfänger 29 aufweist, der z. B. von in einer Zeile angeordneten Photodioden gebildet und dem eine z. B. von einer Linse gebildete Empfangsoptik 31 vorgelagert ist.

Um eine senkrecht zur Sende-/Empfangsebene verlaufende Achse 23 ist ein als Strahlungsumlenkeinrichtung dienendes und eine der Sende-/Empfangsebene zugewandte ebene Reflexionsfläche 19 aufweisendes Prisma 15 kontinuierlich mit einer konstanten Drehzahl rotierbar. Hierzu ist das Prisma 15 mit einer Antriebseinheit 33 verbunden.

Für bestimmte Fahrzeuganwendungen sind eine Scanfrequenz von 10 Hz, d.h. von 10 jeweils 360° umfassenden Abtastungen oder Scans pro Sekunde, und eine Winkelauflösung von zumindest 1° erforderlich. Hierbei muß für eine Winkelauflösung von 1° die Laserdiode 25 Strahlungspulse mit einer Frequenz von 3600 Hz erzeugen. Die Laserdiode 25 des erfindungsgemäßen Scanners arbeitet mit einer Pulsfrequenz von 14400 Hz, wodurch eine Winkelauflösung von 0,25° erreicht wird.

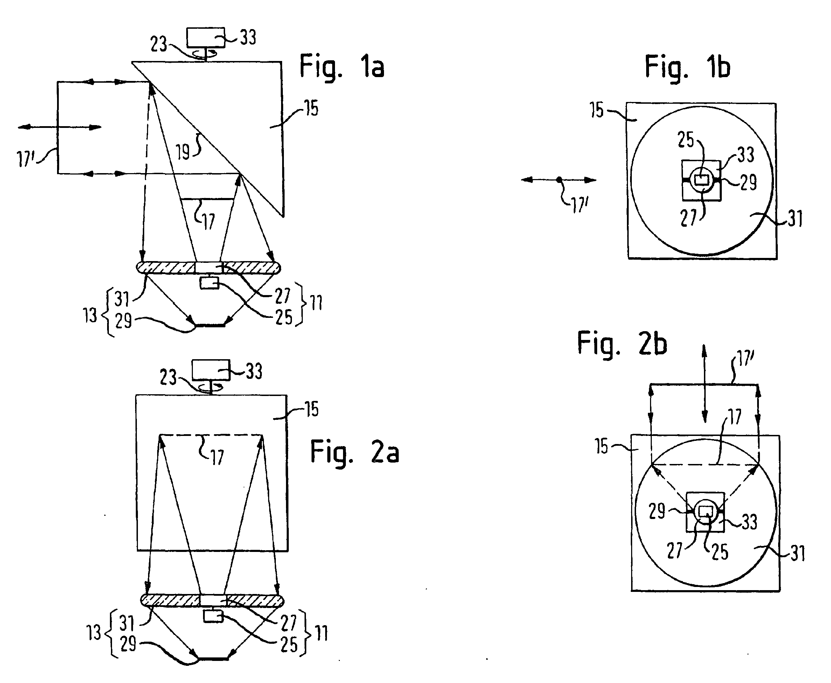

Die Sendeoptik 27 sorgt für fächerartige Aufweitung oder Aufspreizung der von der Laserdiode 25 erzeugten Strahlung derart, daß die Front 17 der sich in Richtung der Reflexionsfläche 19 ausbreitenden Strahlung strich-förmig ist und in der Drehstellung der Strahlungsumlenkeinrichtung 15 gemäß Fig. 1a und 1b folglich ein Strahlungsstrich 17' in den Überwachungsbereich ausgesandt wird, der senkrecht auf der Sende-/Empfangsebene steht.

Durch Verdrehen des Prismas 15 relativ zur Sendeeinheit 11 und Empfangseinheit 13 und somit relativ zu der sich von der Sendeeinheit 11 in Richtung der Reflexionsfläche 19 ausbreitenden langgestreckten Strahlungsfront 17 ändert sich die Orientierung der in den Überwachungsbereich reflektierten Strahlungsfrorit 17', d. h. der Lichtstrich 17' dreht sich mit dem Prisma 15.

Fig. 2a und 2b zeigen den anderen Extremfall bei gegenüber der Stellung von Fig. 1a und 1b um 90° gedrehten Umlenkeinrichtung 15. Die zwischen der Sendeeinheit 11 und der Reflexionsfläche 19 nach wie vor die gleiche Orientierung aufweisende Strahlungsfront 17 wird aufgrund der veränderten Orientierung der geneigt zur Sende-/Empfangsebene verlaufenden Reflexionsfläche 19 als ein Strahlungsstrich 17' in den Überwachungsbereich ausgesandt, der in einer parallel zur Sende-/ Empfangsebene verlaufenden Ebene liegt.

In den nicht dargestellten Zwischendrehstellungen des Prismas 15 weist der in den Überwachungsbereich ausgesandte Lichtstrich 17' eine mehr oder weniger starke Schrägstellung auf.

Vorzugsweise wird die erfindungsgemäße Erfassungseinrichtung in Verbindung mit einem Fahrzeug zur Objekterkennung und -verfolgung eingesetzt. Dabei wird die Erfassungseinrichtung vorzugsweise im oder am Fahrzeug derart angebracht, daß die Sende-/Empfangsebene bei normalem Fahrbetrieb, d. h. bei horizontal ausgerichtetem Fahrzeug horizontal, d. h. senkrecht zur Fahrzeug-Hochachse verläuft und der aufrecht stehende Lichtstrich 17' gemäß Fig. 1a und 1b in Fahrtrichtung des Fahrzeugs nach vorne ausgesandt wird. Die Unterteilung des Strahlungsempfängers 29 der Empfangseinheit 13 in mehrere Einzelempfänger erlaubt eine getrennte Auswertung unterschiedlicher Bereiche des auf den Empfänger 29 reflektierten Lichtstrichs und damit die Erfassung von Höhenprofilen der jeweils abgetasteten Objekte.

Bei dieser Anwendung werden die seitlich des Fahrzeugs gelegenen Bereiche mit einer horizontal verlaufenden Strahlungsfront, d. h. mit einem liegenden Lichtstrich, abgetastet, so daß im Gegensatz zu der Abtastung in Fahrtrichtung nach vorne keine Höheninformationen gewonnen werden. Da aber in den meisten Fahrzeuganwendungen Informationen aus den in Fahrtrichtung vor dem Fahrzeug gelegenen Bereichen von höchster Relevanz sind, kann dieser Umstand in der Praxis ohne weiteres in Kauf genommen werden, zumal ein liegender und sich parallel zu einer senkrecht zur Drehachse 23 der Strahlungsumlenkeinrichtung 15 verlaufenden Ebene erstrekkender Lichtstrich wenigstens für bestimmte Fahrzeuganwendungen den Vorteil einer Mehrfachabtastung bietet. Der liegende bzw. in der Abtastebene liegende Lichtstreich ermöglicht außerdem in vorteilhafter Weise eine Reduzierung der Scanfrequenz, da mit ihm mehrere nebeneinander liegende Meßpunkte gleichzeitig vermessen werden. Die Scanfrequenz kann somit um einen der Anzahl der Meßpunkte entsprechenden Faktor reduziert werden.

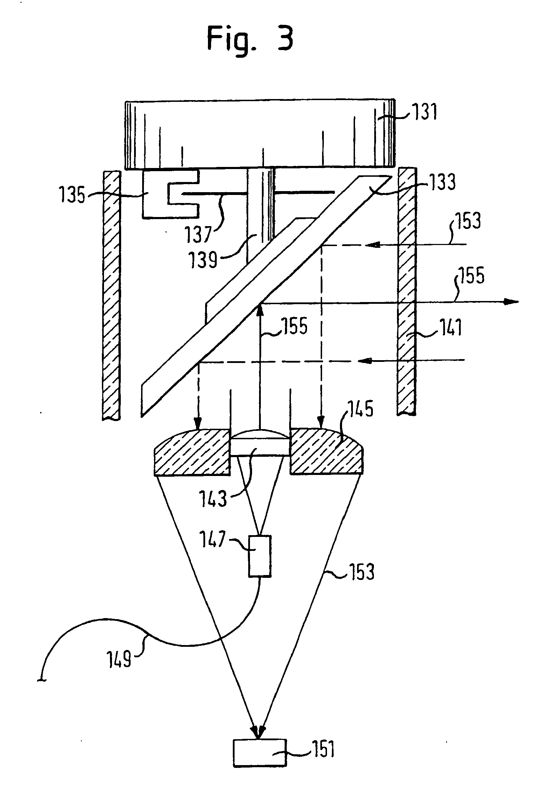

Die in Fig. 3 dargestellt optoelektronische Erfassungseinrichtung ist ebenfalls ein Laserscanner mit einem einen Laserchip umfassenden und einen Anschluß 149 aufweisenden Lasermodul 147, das als linienförmige Strahlungsquelle dient, einer als Sendelinse dienenden Projektionslinse 143, einem um eine Achse 139 mittels eines Motors 131 drehbaren Spiegel 133 sowie einer Empfangseinheit, die eine die Projektionslinse 143 umgebende Empfangslinse 145 und ein Empfangsorgan 151 mit einem flächigen Strahlungsempfänger in Form eines Diodenarrays umfaßt, das eine einzeilige Anordnung mehrerer Photodioden aufweist.

Die Spiegelbaugruppe ist in einem Glastubus 141 angeordnet. Mittels einer Encoderscheibe 137 und einer Winkelmeßeinrichtung 135 wird die Winkelstellung des Spiegels 133 ermittelt.

Die von der Sendeeinheit ausgesandte und nach Reflexion am Spiegel 133 aus dem Glastubus 141 austretende und in den Überwachungsbereich eintretende Strahlung 155 wird nach Reflexion im Überwachungsbereich als einfallende Strahlung 153 wiederum über den Spiegel 133 auf die Empfangslinse 145 gelenkt und von dieser auf das Diodenarray des Empfangsorgans 151 projiziert.

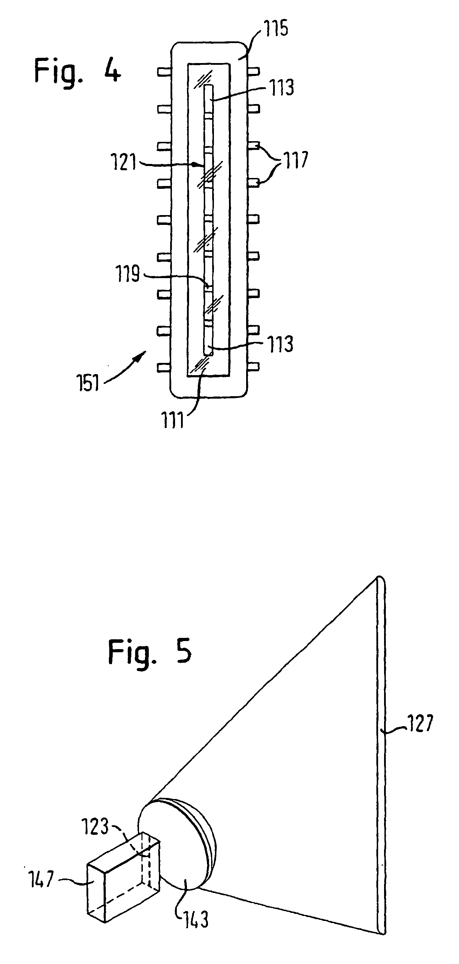

Fig. 4 zeigt das aus in diesem Ausführungsbeispiel acht in Reihe angeordneten Avalanche Photo Dioden 113 bestehende, als flächiger Strahlungsempfänger dienende Diodenarray 121 des Empfangsorgans 151. Die einzelnen Diodenelemente 113 sind durch Stege 119 voneinander getrennt, an denen der Empfänger 121 "blind" ist.

Das durch ein Glasfenster 111 geschützte Diodenarray 121 ist in einem mit Anschlußpins 117 versehenen Gehäuse 115 angeordnet. An jede Einzeldiode 113 ist ein separater, nicht dargestellter Verstärker angeschlossen, so daß für jedes einer der Einzeldioden 113 entsprechende Sehfeld eine separate Entfernungsmessung durchgeführt werden kann. Die Verstärker sind an eine nicht dargestellte gemeinsame Auswerteeinheit angeschlossen.

Fig. 5 zeigt schematisch den Laserchip 147 der Sendeeinheit, der einen als linienförmige Strahlungsquelle dienenden PN-Übergang 123 aufweist. Dem Laserchip 147 ist eine Projektionslinse 143 vorgelagert. Die Sendeeinheit aus Lasermodul 147 und Sendelinse 143 erzeugt einen Strahlungs- oder Lichtstrich 127 als projiziertes Bild der linienförmigen Strahlungsquelle 123.

Die sich als Strahlungsstrich ausbreitende aufgespreizte Strahlung, d. h. die von der Sendeeinheit 143, 147 ausgesandte langgestreckte Strahlungsfront, trifft auf den geneigten, bezüglich der stationären Sende- /Empfangseinheit rotierenden Spiegel 133 und wird in einer von der Drehstellung des Spiegels 133 abhängigen Orientierung aus dem Tubus 141 heraus in den Überwachungsbereich reflektiert.

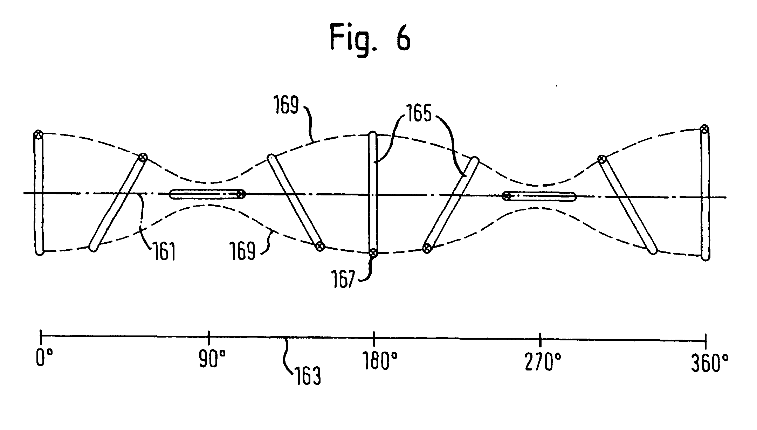

Fig. 6 zeigt das projizierte Scanbild der erfindungsgemäßen Erfassungseinrichtung für eine vollständige, einen Horizontalwinkel von 360° umfassende Umdrehung des Drehspiegels 133. Aufgrund des rotierenden Spiegels 133 wird das Bild 165 der strichförmigen Laserquelle 123 bei einer Spiegelrotation einmal um sich selbst bezüglich des Horizonts 161 gedreht, wodurch eine sinusförmige Spreizung mit einer Einhüllenden 169 entsteht. Dabei gibt der Sinus die effektive Höhe des Lichtstrichs an.

Bei an einem Fahrzeug montiertem Laserscanner wird dieser derart ausgerichtet, daß die Bäuche der sinusförmigen Spreizung in Fahrtrichtung nach vorne und in Rückwärtsrichtung gerichtet sind, so daß in diesen Richtungen eine für zumindest die meisten Fahrzeuganwendungen vorteilhafte Spreizung der Strahlung in vertikaler Richtung erfolgt, d.h. die Fahrzeugumgebung nach vorne und hinten mit einem großen Vertikalwinkel abgetastet wird.

In Fig. 6 ist die Lage eines einem der acht Diodenelemente 113 entsprechenden Bereiches 167 des projizierten Strichbildes 165 für verschiedene Orientierungen des Strichbildes 165 dargestellt, um die Bewegung dieses Teils des insgesamt strichförmigen Sehfeldes während des Scanbetriebs zu veranschaulichen.

Mittels der an das Empfangsorgan 151 angeschlossenen Auswerteeinheit wird die sich kontinuierlich verändernde Orientierung des strichförmigen Bildes 165 der linienförmigen Strahlungsquelle 123 im Überwachungsbereich, das stets auf dem stationären und somit immer die gleiche Orientierung im Scanner aufweisende Diodenarray 121 abgebildet wird, bei der Auswertung der empfangenen Strahlung 153 berücksichtigt.

### Bezugszeichenliste

- 11: Sendeeinheit
- 13: Empfangseinheit
- 15: Strahlungsumlenkeinrichtung, Prisma
- 17, 17': Strahlungsfront, Lichtstrich
- 19: Reflexionsfläche, Planspiegel
- 23: Drehachse
- 25: Strahlungsquelle, Laserdiode
- 27: Sendeoptik
- 29: Strahlungsempfänger
- 31: Empfangsoptik
- 33: Antriebseinheit
- 111: Glasfenster
- 113: Diodenelement
- 115: Gehäuse
- 117: Anschlußpins
- 119: Steg
- 121: Empfänger, Diodenarray
- 123: PN-Übergang, linienförmige Strahlungsquelle
- 127: Bild der linienförmigen Strahlungsquelle
- 131: Motor
- 133: Drehspiegel
- 135: Winkelmeßeinrichtung
- 137: Encoderscheibe
- 139: Drehachse
- 141: Glastubus
- 143: Sende- bzw. Projektionslinse
- 145: Empfangslinse
- 147: Lasermodul, Laserchip
- 149: Laseranschluß
- 151: Empfangsorgan
- 153: einfallende Strahlung
- 155: gesendete Strahlung
- 161: Horizontale
- 163: Horizontalwinkel
- 165: Bild der Linienquelle
- 167: Diodenelementbereich
- 169: Einhüllende

## Patentansprüche

1. Optoelektronische Erfassungseinrichtung, insbesondere Laser-Scanner, mit wenigstens einer in einer Sendeebene angeordneten Sendeeinheit (11, 143, 147) zur Aussendung bevorzugt gepulster elektromagnetischer Strahlung, zumindest einer der Sendeeinheit (11, 143, 147) zugeordneten und in einer Empfongsebene angeordneten Empfangseinheit (13, 145, 151) und wenigstens einer Strahlungsumlenkeinrichtung (15, 133), mit der von der Sendeeinheit (11, 143, 147) ausgesandte Strahlung in einen Überwachungsbereich und aus dem Überwachungsbereich reflektierte Strahlung auf die Empfangseinheit (13, 145, 151) lenkbar ist, wobei die Front der sich in Richtung der Strahlungsumlenkeinrichtung (15, 133) ausbreitenden Strahlung von langgestreckter Form ist,
**dadurch gekennzeichnet ,**
**daß** die Strahlungsumlenkeinrichtung (15, 133) derart ausgebildet und relativ zur langgestreckten Strahlungsfront (17) bewegbar ist, daß die in den Überwachungsbereich reflektierte Strahlungsfront (17') verschiedene, von der Stellung der bewegten Strahlungsunglenkeinrichtung (15, 133) abhängige Orientierungen im Raum einnimmt, wobei die Sendeeinheit (11, 143, 147) zur Aussendung der langgestreckten Strahlungsfront (17) ausgebildet ist, und wobei eine Reflexionsfläche (19) der Strahlungsumlenkeinrichtung (15, 133) geneigt zu einer Sende- und/oder Empfangsebene verläuft und die Strahlungsumlenkeinrichtung (15, 133) um eine sich etwa senkrecht zur Sende- und/oder Empfangsebene erstreckende Achse (23, 139) drehbar ist.

2. Einrichtung nach Anspruch 1,
**dadurch gekennzeichnet ,**
**daß** die Strahlungsfront (17, 17') ein durchgehender Strahlungsstrich ist.

3. Einrichtung nach Anspruch 1 ,
**dadurch gekennzeichnet ,**
**daß** die Strahlungsfront von diskreten, entlang einer Linie angeordneten Strahlungsflecken gebildet ist.

4. Einrichtung nach einem der vorhergehenden Ansprüche,
**dadurch gekennzeichnet ,**
**daß** die Strahlungsumlenkeinrichtung (15, 133) relativ zur Sendeeinheit (11, 143, 147) und Empfangseinheit (13, 145, 151) bewegbar ist.

5. Einrichtung nach einem der vorhergehenden Ansprüche,
**dadurch ggekennzeichnet ,**
**daß** sich die Strahlung aufspreizend in Richtung der Strahlungsumlenkeinrichtung-(15, 133) ausbreitet.

6. Einrichtung nach Anspruch 5,
**dadurch gekennzeichnet ,**
**daß** der Ursprung der Aufspreizung während des Betriebs relativ zur Sendeeinheit (11, 143, 147) und Empfangseinheit (13, 145, 151) unbewegt ist.

7. Einrichtung nach Anspruch 5 oder 6,
**dadurch gekennzeichnet ,**
**daß** der Ursprung der Aufspreizung von der Sendeeinheit (11, 143, 147) gebildet ist.

8. Einrichtung nach einem der vorhergehenden Ansprüche,
**dadurch gekennzeichnet ,**
**daß** die sich von der Sendeeinheit (11, 143, 147) zur Strahlungsumlenkeinrichtung (15, 133) ausbreitende Strahlung durch zur Strahlungsbrechung oder -beugung dienende optische Bauelemente unbeeinflußt ist.

9. Einrichtung nach einem der vorhergehenden Ansprüche,
**dadurch gekennzeichnet ,**
**daß** die Strahlungsumlenkeinrichtung (15, 133) drehbar und insbesondere zur Ausführung einer kontinuierlichen Rotationsbewegung mit einer konstanten Drehzahl ausgebildet ist.

10. Einrichtung nach einem der vorhergehenden Ansprüche,
**dadurch gekennzeichnet ,**
**daß** die Strahlungsumlenkeinrichtung (15, 133) wenigstens eine ebene Reflexionsfläche (19) für von der Sendeeinheit (11, 143, 147) ausgesandte und aus dem Überwachungsbereich reflektierte Strahlung aufweist und insbesondere als Spiegel- und/oder Prisma-Einrichtung, bevorzugt als Porro-Prisma, ausgebildet ist.

11. Einrichtung nach einem der vorhergehenden Ansprüche,
**dadurch gekennzeichnet ,**
**daß** die Sendeeinheit (11, 143, 147) als Strahlungsquelle wenigstens eine Laserdiode (25, 147) umfaßt, die zur Aussendung einer linien-oder strichförmigen Strahlungsfront (17) ausgebildet ist.

12. Einrichtung nach einem der vorhergehenden Ansprüche,
**dadurch gekennzeichnet ,**
**daß** einer Strahlungsquelle (25, 147) der Sendeeinheit (11, 143, 147) eine Sendeoptik (27, 143) vorgelagert ist.

13. Einrichtung nach Anspruch 12,
**dadurch gekennzeichnet ,**
**daß** die der Strahlungsquelle (25, 147) vorgelagerte Sendeoptik (27, 143) relativ zur Strahlungsquelle (25, 147) feststehend angeordnet ist.

14. Einrichtung nach einem der vorhergehenden Ansprüche,
**dadurch gekennzeichnet ,**
**daß** die Empfangseinheit (13, 145, 151) wenigstens einen flächigen Strahlungsempfänger (29, 121) aufweist, dem bevorzugt eine Empfangsoptik (31, 145) vorgelagert ist.

15. Einrichtung nach Anspruch 14,
**dadurch gekennzeichnet ,**
**daß** der Strahlungsempfänger (29, 121) an die langgestreckte Form der Strahlungsfront (17, 17') angepaßt ist und insbesondere eine etwa streifenförmige Grundform aufweist.

16. Einrichtung nach einem der vorhergehenden Ansprüche,
**dadurch gekennzeichnet ,**
**daß** die Empfangseinheit (13, 145, 151), insbesondere ein flächiger Strahlungsempfänger (29, 121), eine Mehrzahl von Photodioden (113) umfaßt, die insbesondere ein- oder mehrzeilig angeordnet sind.

17. Einrichtung nach einem der vorhergehenden Ansprüche,
**dadurch gekennzeichnet ,**
**daß** die Sendeeinheit (11) und die Empfangseinheit (13, 145, 151) zumindest näherungsweise eine gemeinsame Sende-/ Empfangsebene bilden.

18. Einrichtung nach Anspruch 17,
**dadurch gekennzeichnet ,**
**daß** die Sendeeinheit (11) wenigstens eine Strahlungsquelle (25, 147) und die Empfangseinheit (13, 145, 151) wenigstens einen Strahlungsempfänger (29, 121) umfasst, wobei die gemeinsame Sende-/Empfangsebene von der Strahlungsquelle (25, 147) oder zumindest einer der Strahlungsquelle (25, 147) vorgelagerten Sendeoptik (27, 143) einerseits und einer dem Strahlungsempfänger (29, 121) vorgelagerten Empfangsoptik (31, 145) andererseits gebildet ist.

19. Verwendung wenigstens einer optoelektronischen Erfassungseinrichtung nach einem der vorhergehenden Ansprüche in Verbindung mit einem Fahrzeug insbesondere zur Objekterkennung und - verfolgung.

20. Verwendung nach Anspruch 19,
**dadurch gekennzeichnet ,**
**daß** eine optoelektronische Erfassungseinrichtung verwendet wird, die derart ausgebildet ist und am oder im Fahrzeug angebracht wird, daß bei normalem Fahrbetrieb die eine langgestreckte Form aufweisende Strahlungsfront (17') sich bei Ausbreitung in Fahrtrichtung nach vorne zumindest im wesentlichen in vertikaler Richtung erstreckt.

21. Verwendung nach Anspruch 19 oder 20,
**dadurch gekennzeichnet ,**
**daß** die optoelektronische Erfassungseinrichtung derart am oder im Fahrzeug angebracht wird, daß eine Sende- und/oder Empfangsebene, insbesondere eine von einem flächigen Strahlungsempfänger (29, 121) der Empfangseinheit (13, 151) festgelegte Ebene, bei normalem Fahrbetrieb zumindest im wesentlichen horizontal verläuft.

## Claims

1. An optoelectronic detection device, in particular a laser scanner, comprising at least one transmitter unit (11, 143, 147) arranged in a transmission plane for the transmission of electromagnetic radiation, preferably pulsed electromagnetic radiation, at least one receiver unit (13, 145, 151) associated with the transmitter unit (11, 143, 147) and arranged in a reception plane and at least one radiation deflection device (15, 133) with which radiation transmitted by the transmitter unit (11, 143, 147) can be guided into a monitored zone and radiation reflected out of the monitored zone can be guided onto the receiver unit (13, 145, 151), with the front of the radiation propagating in the direction of the radiation deflection device (15, 133) being of elongated shape,
**characterized in that**
the radiation deflection device (15, 133) is formed and is movable relative to the elongated radiation front (17) such that the radiation front (17') reflected into the monitored zone adopts different orientations in space in dependence on the position of the moved radiation deflection device (15, 133),
wherein the transmitter unit (11, 143, 147) is made for the transmission of the elongated radiation front (17), and
wherein a reflection surface (19) of the radiation deflection device (15, 133) extends in an inclined manner to a transmission plane and/or a reception plane and the radiation deflection device (15, 133) is rotatable about an axis (23, 139) extending approximately perpendicular to the transmission plane and/or reception plane

2. A device in accordance with claim 1, **characterized in that** the radiation front (17, 17') is a continuous radiation line.

3. A device in accordance with claim 1, **characterized in that** the radiation front is formed by discrete radiation beads arranged along a line.

4. A device in accordance with any one of the preceding claims, **characterized in that** the radiation deflection device (15, 133) is movable relative to the transmitter unit (11, 143, 147) and the receiver unit (13, 145, 151).

5. A device in accordance with any one of the preceding claims, **characterized in that** the radiation propagates in an expanding manner in the direction of the radiation deflection device (15, 133).

6. A device in accordance with claim 5, **characterized in that** the origin of the expansion is unmoved relative to the transmitter unit (11, 143, 147) and the receiver unit (13, 145, 151) during operation.

7. A device in accordance with claim 5 or claim 6, **characterized in that** the origin of the expansion is formed by the transmitter unit (11, 143, 147).

8. A device in accordance with any one of the preceding claims, **characterized in that** the radiation propagating from the transmitter unit (11, 143, 147) to the radiation deflection device (15, 133) is not influenced by optical components serving for the radiation refraction or for the radiation diffraction.

9. A device in accordance with any one of the preceding claims, **characterized in that** the radiation deflection device (15, 133) is made rotatable and is in particular adapted to carry out a continuous rotational movement at a constant speed.

10. A device in accordance with any one of the preceding claims, **characterized in that** the radiation deflection device (15, 133) has at least one planar reflection surface (19) for radiation transmitted by the transmitter unit (11, 143, 147) and reflected out of the monitored zone and is in particular made as a mirror device and/or a prism device, preferably as a Porro prism.

11. A device in accordance with any one of the preceding claims, **characterized in that** the transmitter unit (11, 143, 147) includes, as a radiation source, at least one laser diode (25, 147) which is made for the transmission of a linear or streak-shaped radiation front (17).

12. A device in accordance with any one of the preceding claims, **characterized in that** an optical transmission system (27, 143) is disposed in front of a radiation source (25, 147) of the transmitter unit (11, 143, 147).

13. A device in accordance with claim 12, **characterized in that** the optical transmission system (27, 143) disposed in front of the radiation source (25, 147) is arranged stationary relative to the radiation source (25, 147).

14. A device in accordance with any one of the preceding claims, **characterized in that** the receiver unit (13, 145, 151) has at least one areal radiation receiver (29, 121) which preferably has an optical reception system (31, 145) disposed in front of it.

15. A device in accordance with claim 14, **characterized in that** the radiation receiver (29, 121) is matched to the elongated shape of the radiation front (17, 17') and in particular has an approximately strip-like basic shape.

16. A device in accordance with any one of the preceding claims, **characterized in that** the receiver unit (13, 145, 151), in particular an areal radiation receiver (29, 121), includes a plurality of photodiodes (113) which are in particular arranged in one line or in a plurality of lines.

17. A device in accordance with any one of the preceding claims, **characterized in that** the transmitter unit (11) and the receiver unit (13, 145, 151) at least approximately form a common transmission plane/ reception plane.

18. A device in accordance with claim 17, **characterized in that** the transmitter unit (11) includes at least one radiation source (25, 147) and the receiver unit (13, 145, 151) includes at least one radiation receiver (29, 121), wherein the common transmission/reception plane is formed by the radiation source (25, 147) or by at least one optical transmission system (27, 43) disposed in front of the radiation source (25, 147), on the one hand, and by an optical reception system (31, 145) disposed in front of the radiation receiver (29, 121), on the other hand.

19. Use of at least one optoelectronic detection device in accordance with at least one of the preceding claims in connection with a vehicle in particular for object recognition and object tracking.

20. Use in accordance with claim 19, **characterized in that** an optoelectronic detection device is used which is made and is attached to or in the vehicle such that, in normal traveling operation, the radiation front (17') having an elongated shape extends at least substantially in a vertical direction on forward propagation in the direction of travel.

21. Use in accordance with claim 19 or claim 20, **characterized in that** the optoelectronic detection device is attached to or in the vehicle such that a transmission plane and/or reception plane, in particular a plane defined by an areal radiation receiver (29, 12 1) of the receiver unit (13, 11), extends at least substantially horizontally in normal traveling operation.

## Revendications

1. Système de détection optoélectronique, en particulier scanneur à laser, comportant au moins une unité émettrice (11, 143, 147) agencée dans un plan d'émission et destinée à émettre un rayonnement électromagnétique de préférence pulsé, au moins une unité réceptrice (13, 145, 151) agencée dans un plan de réception et associée à l'unité émettrice (11, 143, 147), et au moins un dispositif de déviation de rayonnement (15, 133) au moyen duquel le rayonnement émis par l'unité émettrice (11, 143, 147) peut être dévié jusque dans une zone de surveillance et le rayonnement réfléchi de la zone de surveillance peut être dévié vers l'unité réceptrice (13, 145, 151), le front du rayonnement qui se propage dans la direction du dispositif de déviation de rayonnement (15, 133) est de forme allongée,
**caractérisé en ce que**
le dispositif de déviation de rayonnement (15, 133) est réalisé de telle manière et mobile par rapport au front de rayonnement allongé (17) de telle sorte que le front de rayonnement (17') réfléchi dans la zone de surveillance occupe différentes orientations dans l'espace qui dépendent de la position du dispositif de déviation de rayonnement déplacé (15, 133),
l'unité émettrice (11, 143, 147) est réalisée pour émettre le front de rayonnement allongé (17), et
une surface de réflexion (19) du dispositif de déviation de rayonnement (15, 133) s'étend de façon inclinée par rapport à un plan d'émission et/ou de réception, et le dispositif de déviation de rayonnement (15, 133) peut tourner autour d'un axe (23, 39) qui s'étend approximativement perpendiculairement au plan d'émission et/ou de réception.

2. Système selon la revendication 1,
**caractérisé en ce que**
le front de rayonnement (17, 17') est un trait de rayonnement continu.

3. Système selon la revendication 1,
**caractérisé en ce que**
le front de rayonnement est formé par des taches de rayonnement discrètes agencées le long d'une ligne.

4. Système selon l'une des revendications précédentes,
**caractérisé en ce que**
le dispositif de déviation de rayonnement (15, 133) est mobile par rapport à l'unité émettrice (11, 143, 147) et par rapport à l'unité réceptrice (13, 145, 151).

5. Système selon l'une des revendications précédentes,
**caractérisé en ce que**
le rayonnement se propage en divergence dans la direction du dispositif de déviation de rayonnement (15, 133).

6. Système selon la revendication 5,
**caractérisé en ce que**
l'origine de la divergence pendant le fonctionnement est immobile par rapport à l'unité émettrice (11, 143, 147) et par rapport à l'unité réceptrice (13, 145, 151).

7. Système selon la revendication 5 ou 6,
**caractérisé en ce que**
l'origine de la divergence est constituée par l'unité émettrice (11, 143, 147).

8. Système selon l'une des revendications précédentes,
**caractérisé en ce que**
le rayonnement qui se propage depuis l'unité émettrice (11, 143, 147) vers le dispositif de déviation de rayonnement (15, 133) n'est pas influencé par des éléments constitutifs optiques servant à la réfraction ou à la diffraction du rayonnement.

9. Système selon l'une des revendications précédentes,
**caractérisé en ce que**
le dispositif de déviation de rayonnement (15, 133) est rotatif et réalisé avec une vitesse de rotation constante en particulier pour exécuter un mouvement de rotation continu.

10. Système selon l'une des revendications précédentes,
**caractérisé en ce que**
le dispositif de déviation de rayonnement (15, 133) présente au moins une surface de réflexion plane (19) pour le rayonnement émis par l'unité émettrice (11, 143, 147) et réfléchi depuis la zone de surveillance et est réalisé en particulier sous forme de dispositif à miroir et/ou à prisme, de préférence sous forme de prisme de Porro.

11. Système selon l'une des revendications précédentes,
**caractérisé en ce que**
l'unité émettrice (11, 143, 147) comprend à titre de source de rayonnement au moins une diode laser (25, 147) qui est réalisée pour émettre un front de rayonnement (17) en forme de ligne ou de trait.

12. Système selon l'une des revendications précédentes,
**caractérisé en ce que**
une optique d'émission (27, 143) est agencée en amont d'une source de rayonnement (25, 147) de l'unité émettrice (11, 143, 147).

13. Système selon la revendication 12,
**caractérisé en ce que**
l'optique d'émission (27, 143) agencée en amont de la source de rayonnement (25, 147) est agencée stationnaire par rapport à la source de rayonnement (25, 147).

14. Système selon l'une des revendications précédentes,
**caractérisé en ce que**
l'unité réceptrice (13, 145, 151) comprend au moins un récepteur de rayonnement surfacique (29, 121) en amont duquel est agencée de préférence une optique de réception (31, 145).

15. Système selon l'une des revendications précédentes,
**caractérisé en ce que**
le récepteur de rayonnement (29, 121) est adapté à la forme allongée du front de rayonnement (17, 17') et comprend en particulier une forme de base approximativement en forme de ruban.

16. Système selon l'une des revendications précédentes,
**caractérisé en ce que**
l'unité réceptrice (13, 145, 151), en particulier un récepteur de rayonnement surfacique (29, 121), comprend une pluralité de photodiodes (113) qui sont agencées en particulier en une ou en plusieurs lignes.

17. Système selon l'une des revendications précédentes,
**caractérisé en ce que**
l'unité émettrice (11) et l'unité réceptrice (13, 145, 151) forment au moins approximativement un plan d'émission/réception commun.

18. Système selon la revendication 17,
**caractérisé en ce que**
l'unité émettrice (11) comprend au moins une source de rayonnement (25, 147) et l'unité réceptrice (13, 145, 151) comprend au moins un récepteur de rayonnement (29, 121), le plan d'émission/réception commun étant formé d'une part par la source de rayonnement (25, 147) ou par au moins une optique d'émission (27, 143) agencée en amont de la source de rayonnement (25, 147) et d'autre part par une optique de réception (31, 145) agencée en amont du récepteur de rayonnement (29, 121).

19. Utilisation d'au moins un système de détection optoélectronique selon l'une des revendications précédentes en association avec un véhicule en particulier pour la reconnaissance et le suivi d'objets.

20. Utilisation selon la revendication 19,
**caractérisée en ce que**
l'on utilise un système de détection optoélectronique qui est réalisé et monté sur ou dans le véhicule de telle sorte que pendant le fonctionnement de conduite normal, le front de rayonnement (17') présentant une forme allongée s'étend au moins sensiblement dans la direction verticale lors d'une propagation dans la direction de conduite vers l'avant.

21. Utilisation selon la revendication 19 ou 20,
**caractérisée en ce que**
le système de détection optoélectronique est monté sur ou dans le véhicule de telle sorte qu'un plan d'émission et/ou de réception, en particulier un plan fixé par un récepteur de rayonnement surfacique (29, 121) de l'unité réceptrice (13, 151) s'étend au moins sensiblement horizontalement lors d'un fonctionnement de conduite normal.
